# EUROPÄISCHE PATENTSCHRIFT

(11) **EP 3 307 595 B1**
(45) Veröffentlichungstag und Bekanntmachung des Hinweises auf die Patenterteilung: **17.03.2021**
(21) Anmeldenummer: 16729489.1
(22) Anmeldetag: 04.06.2016
(51) Int. Cl.: B60T 8/32, B60T 13/66, B60T 13/68, B60T 8/17

(54) **VERFAHREN ZUM REGELN VON BREMSEN IN EINEM ANHÄNGEFAHRZEUG**
METHOD FOR CONTROLLING BRAKES IN A TRAILER VEHICLE
PROCÉDÉ DE COMMANDE DE FREIN DANS UNE REMORQUE

(30) Priorität: 10.06.2015 DE 102015007384
(43) Veröffentlichungstag der Anmeldung: 18.04.2018
(73) Patentinhaber: WABCO GmbH, 30453 Hannover (DE)
(72) Erfinder: RISSE, Rainer, 30982 Pattensen-Reden (DE); SIEKER, Armin, 33611 Bielefeld (DE); STENDER, Axel, 31787 Hameln (DE)
(74) Vertreter: Koschnitzki, Thomas
(86) Internationale Anmeldenummer: PCT/EP2016/000920
(87) Internationale Veröffentlichungsnummer: WO 2016/198152

(56) Entgegenhaltungen:
- EP-A1- 2 269 880
- EP-A2- 1 538 054
- EP-A2- 2 058 186
- DE-A1- 3 544 356
- DE-A1- 19 942 533
- DE-A1-102008 009 882
- DE-A1-102012 101 871
- DE-A1-102013 106 260
- DE-T2- 60 300 470
- GB-A- 2 490 925
- GB-A- 2 492 124

## Beschreibung

Die Erfindung betrifft ein Verfahren zum Regeln von Bremsen in einem Anhängefahrzeug mit pneumatischer Bremsanlage, Betriebsbremsen und elektronischem Bremssystem mit Antiblockier-Regelung, wobei mindestens eine Achse des Anhängefahrzeugs mit Federspeicherbremsen und Drehzahlsensoren bestückt ist, und wobei die pneumatische Bremsanlage insbesondere einen Vorratsbehälter mit Vorratsbehälterdruck aufweist.

Moderne Nutzfahrzeuge - Zugfahrzeuge und Anhängefahrzeuge - sind mit einer pneumatischen Bremsanlage ausgestattet, der ein elektronisches Bremssystem übergeordnet ist. Außerdem ist eine Antiblockier-Regelung vorgesehen, mit der ein Blockieren der Räder beim Bremsen verhindert wird. Hierzu werden Bremszylinder der Betriebsbremsen über elektronisch angesteuerte Magnetventile nach Maßgabe der vorgesehenen Regelung belüftet und entlüftet. Angesteuert werden die Magnetventile über ein elektronisches Steuergerät, welches alle für die Betätigung der Bremsen erforderlichen Daten erhält, einschließlich der Betätigung eines Bremspedals durch den Fahrer und der Daten von Drehzahlsensoren (auch als ABS-Sensoren bezeichnet) an Rädern des Fahrzeugs.

Das Anhängefahrzeug ist mit dem Zugfahrzeug über eine Vorratsdruckleitung, eine Steuerdruckleitung und eine elektrische Leitung verbunden. Über die elektrische Leitung werden auch Daten übertragen.

Im Anhängefahrzeug ist ein Vorratsbehälter mit Vorratsbehälterdruck vorhanden, so dass auch nach dem Trennen der Vorratsdruckleitung ein Druckluftvorrat für die Betätigung der Bremsen des Anhängefahrzeugs zur Verfügung steht.

Das Anhängefahrzeug weist sogenannte Federspeicher-Bremsen auf. Sobald der Vorratsbehälterdruck unter einen Grenzwert fällt, werden Bremszylinder der Federspeicher-Bremsen automatisch entlüftet und das Anhängefahrzeug wird gebremst. Dabei können die Räder blockieren.

Das Anhängefahrzeug ist mit einer weiteren Notbremsfunktion ausgestattet. Bei Abriss der Vorratsdruckleitung zwischen Zugfahrzeug und Anhängefahrzeug werden die Bremszylinder der Federspeicher-Bremsen ebenfalls automatisch entlüftet, so dass das Anhängefahrzeug gebremst wird. Auch dabei können die Räder blockieren.

Typischerweise weist das Anhängefahrzeug ein eigenes elektronisches Steuergerät für die Bremsen auf, welches über die elektrische Leitung auch digitale Bremssignale vom Zugfahrzeug erhält.

In der EP 1 538 054 ist ein Bremssystem eines Anhängefahrzeugs dargestellt, mit dem für den Fall einer automatischen Bremsung über Federspeicher die Räder einer Seite blockieren, während für die Räder der anderen Seite eine Antiblockier-Regelung wirksam ist.

Die Schriften EP 2 058 186 A2, DE 199 42 533 A1, DE 10 2012 101 871 A1 und DE 603 00 470 T2 offenbaren pneumatische Bremssysteme für Fahrzeuge.

Aufgabe der vorliegenden Erfindung ist die Schaffung eines Verfahrens, mit dem die Räder beider Seiten des Anhängefahrzeugs für den Fall einer automatischen Bremsung über Federspeicher-Bremsen mit einer Antiblockier-Regelung gebremst werden können.

Zur Lösung der Aufgabe weist das erfindungsgemäße Verfahren die Merkmale des Anspruchs 1 auf, insbesondere folgende Merkmale:
a) das elektronische Bremssystem überwacht, ob ein Bremswunsch vorliegt,
b) das elektronische Bremssystem überwacht, ob mindestens ein Rad der mindestens einen Achse blockiert,
c) wenn kein Bremswunsch vorliegt und mindestens ein Rad der mindestens einen Achse bei Fahrt blockiert, regelt das elektronische Bremssystem die pneumatische Bremsanlage derart, dass die Federspeicher-Bremsen belüftet werden und das Anhängefahrzeug durch die Betriebsbremsen automatisch und mit Antiblockier-Regelung gebremst wird,
d) eine pneumatisch angesteuerte Ventileinheit (48) belüftet die Federspeicher-Bremsen mit dem Vorratsbehälterdruck, wenn an einem Steuereingang der Ventileinheit (48) ein Steuerdruck oberhalb eines Grenzwerts anliegt, und
e) zum Auslösen der Belüftung der Federspeicher-Bremsen wird dem Steuereingang der Ventileinheit (48) der Vorratsbehälterdruck zugeführt.

Mittels der Drehzahlsensoren wird die aktuelle Drehzahl der Räder erfasst und an das Steuergerät der Bremsen übermittelt. Im Steuergerät werden diese Daten ausgewertet und gegebenenfalls festgestellt, ob Räder blockieren. Der Bremswunsch des Fahrers wird ebenfalls im Steuergerät erkannt, da die Betätigung des Bremspedals durch den Fahrer über die elektrische Leitung (elektrische Bremsleitung nach ISO 11992) vom Zugfahrzeug zum Steuergerät im Anhängefahrzeug übermittelt wird. Sofern die genannten Bedingungen vorliegen, werden hierfür vorgesehene Magnetventile zum Belüften der Federspeicher-Bremszylinder angesteuert. Außerdem wird das Anhängefahrzeug durch die Betriebsbremsen (bzw. deren Betriebsbremszylinder) gebremst. Auch hierzu werden Magnetventile vom Steuergerät angesteuert. Die Bremsung erfolgt vorzugsweise maximal und unter Nutzung der Antiblockier-Regelung.

Aus dem Umstand, dass mindestens ein Rad des Anhängefahrzeugs blockiert, wird geschlossen, dass die Federspeicher-Bremsen (bzw. Federspeicher-Bremszylinder) entlüftet sind und die Vorratsdruckleitung abgerissen ist oder ein ähnlich wirksamer Defekt vorliegt. Zusätzlich kann der Vorratsdruck in der Vorratsdruckleitung durch einen entsprechenden Sensor überwacht werden.

Federspeicher-Bremszylinder und Betriebsbremszylinder werden mit Luft aus dem Vorratsbehälter des Anhängefahrzeugs belüftet. Typischerweise ist der Luftvorrat im Vorratsbehälter so groß, dass einige Vollbremsungen möglich sind.

Es ist vorgesehen, dass eine pneumatisch angesteuerte Ventileinheit die Federspeicher-Bremsen mit dem Vorratsbehälterdruck belüftet, wenn an einem Steuereingang der pneumatisch angesteuerten Ventileinheit ein Druck oberhalb eines Grenzwerts anliegt, und dass zum Auslösen der Belüftung der Federspeicher-Bremsen dem Steuereingang der Ventileinheit der Vorratsbehälterdruck zugeführt wird. Der Vorratsbehälterdruck hat in diesem Fall eine doppelte Funktion: Einerseits wird der Vorratsbehälterdruck unmittelbar zur Belüftung der Federspeicher-bremszylinder benötigt; andererseits wird der Vorratsbehälterdruck zugleich als Druck für den Steuereingang verwendet. Die Zufuhr des Vorratsbehälterdrucks zum Steuereingang der pneumatisch angesteuerten Ventileinheit wird durch ein Magnetventil eingeleitet, welches im Normalfall dem Steuereingang den Steuerdruck der Bremsanlage zuführt. Wenn jedoch die im Anspruch 1 genannten Bedingungen erfüllt sind, schaltet das Magnetventil um, so dass dann dem Steuereingang der Ventileinheit der Vorratsbehälterdruck zugeführt wird.

Nach einem weiteren Gedanken der Erfindung wird davon ausgegangen, dass ein Bremswunsch vorliegt, wenn in einer pneumatischen Steuerdruckleitung im Anhängefahrzeug oder in einem Zugfahrzeug des Anhängefahrzeugs ein Druck oberhalb eines Grenzwerts gemessen wird oder wenn auf einer elektrischen Bremsleitung ein Signal zur Betätigung der Betriebsbremsen übermittelt wird. Der Druck in der pneumatischen Steuerdruckleitung wird detektiert und steht im Steuergerät zur Verfügung, ebenso das auf der elektrischen Bremsleitung übermittelte Signal.

Vorteilhafterweise wird das Anhängefahrzeug bis zum Stillstand abgebremst. Nach Erkennung des Stillstands mittels der Drehzahlsensoren oder auf andere Weise können auch die Federspeicher-Bremsen gezielt wieder (ausgelöst durch das Steuergerät) entlüftet werden.

Nach einem weiteren Gedanken der Erfindung ist vorgesehen, dass eine Längsverzögerung des Anhängefahrzeugs überwacht wird und dass nur dann die Federspeicher-Bremsen belüftet werden und das Anhängefahrzeug automatisch gebremst wird, wenn die Längsverzögerung einen Grenzwert überschreitet. Hierzu werden die Daten eines Verzögerungssensors dem Steuergerät zugeführt. Durch diese zusätzlich abgefragte Bedingung kann das Verfahren noch zuverlässiger ausgeführt werden.

Gegenstand der Erfindung ist auch eine Ventilanordnung mit den Merkmalen des Anspruchs 5. Die Ventilanordnung ist für eine pneumatische Bremsanlage eines Anhängefahrzeugs vorgesehen, insbesondere in Verbindung mit einem elektronischen Bremssystem, wobei die pneumatische Bremsanlage einen Vorratsbehälter mit Vorratsbehälterdruck aufweist, mit einer pneumatisch angesteuerten Ventileinheit zum Belüften von Federspeicher-Bremsen mit Vorratsbehälterdruck, sofern an einem Steuereingang der Ventileinheit ein Druck oberhalb eines Grenzwerts anliegt, und mit einem Magnetventil, welches einerseits an einen Steuerdruck der pneumatischen Bremsanlage und an den Vorratsbehälterdruck angeschlossen und zwischen Steuerdruck und Vorratsbehälterdruck umschaltbar ist, und welches andererseits mit dem Steuereingang der Ventileinheit verbunden ist, so dass am Steuereingang der Ventileinheit, je nach Stellung des Magnetventils, Steuerdruck oder Vorratsbehälterdruck anliegen. Unterschieden wird demnach zwischen einem Magnetventil und der pneumatisch angesteuerten Ventileinheit mit Steuereingang. Am Magnetventil liegen Steuerdruck und Vorratsbehälterdruck an. Je nach Stellung des Magnetventils werden Steuerdruck oder Vorratsbehälterdruck dem Steuereingang der pneumatisch angesteuerten Ventileinheit zugeführt. Sobald der Druck am Steuereingang der Ventileinheit einen Grenzwert überschreitet, werden die Federspeicher-Bremszylinder belüftet. Der Vorratsbehälterdruck liegt im Normalfall über dem Grenzwert. Somit kann durch Umschaltung des Magnetventils auf Vorratsbehälterdruck schnell eine Belüftung der Federspeicher-Bremszylinder erzielt werden.

Gegenstand der Erfindung ist auch ein Anhängefahrzeug mit den Merkmalen des Anspruchs 6 mit pneumatischer Bremsanlage, elektronischem Bremssystem und einer Ventilanordnung nach Anspruch 5.

Schließlich ist Gegenstand der Erfindung auch ein elektronisches Steuergerät (Bremsensteuergerät) zur Durchführung des Verfahrens nach einem der Ansprüche 1 bis 4, zur Steuerung einer Ventilanordnung nach Anspruch 5 und/oder für ein Anhängefahrzeug nach Anspruch 6. Das Steuergerät regelt insbesondere den Schaltzustand des Magnetventils bzw. die Umschaltung von Steuerdruck auf Vorratsbehälterdruck und zurück.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 ein Doppelkolben-Ventil für eine pneumatische Bremsanlage eines Anhängefahrzeugs in Fahrtstellung,
Fig. 2 das Doppelkolben-Ventil in der Stellung für eine automatische Einbremsung,
Fig. 3 das Doppelkolben-Ventil in der Stellung für einen Überlastschutz,
Fig. 4 die pneumatische Bremsanlage eines Anhängefahrzeugs mit dem Doppelkolben-Ventil in Fahrtstellung,
Fig. 5 die pneumatische Bremsanlage mit dem Doppelkolben-Ventil in der Stellung für eine automatische Einbremsung,
Fig. 6 die pneumatische Bremsanlage mit dem Doppelkolben-Ventil in Parkstellung,
Fig. 7 die pneumatische Bremsanlage mit dem Doppelkolben-Ventil in der Stellung für einen Überlastschutz,
Fig. 8 die pneumatische Bremsanlage mit einem Select-High-Ventil in Fahrtstellung,
Fig. 9 die pneumatische Bremsanlage mit dem Select-High-Ventil in der Stellung für eine automatische Einbremsung,
Fig. 10 die pneumatische Bremsanlage mit Select-High-Ventil in Parkstellung,
Fig. 11 die pneumatische Bremsanlage mit dem Select-High-Ventil in der Stellung für einen Überlastschutz,
Fig. 12 die pneumatische Bremsanlage mit dem Doppelkolben-Ventil und einem eingeschalteten Blockierschutz,
Fig. 13 die pneumatische Bremsanlage des Anhängefahrzeugs in teilweise vereinfachter Darstellung und mit weiteren Details.

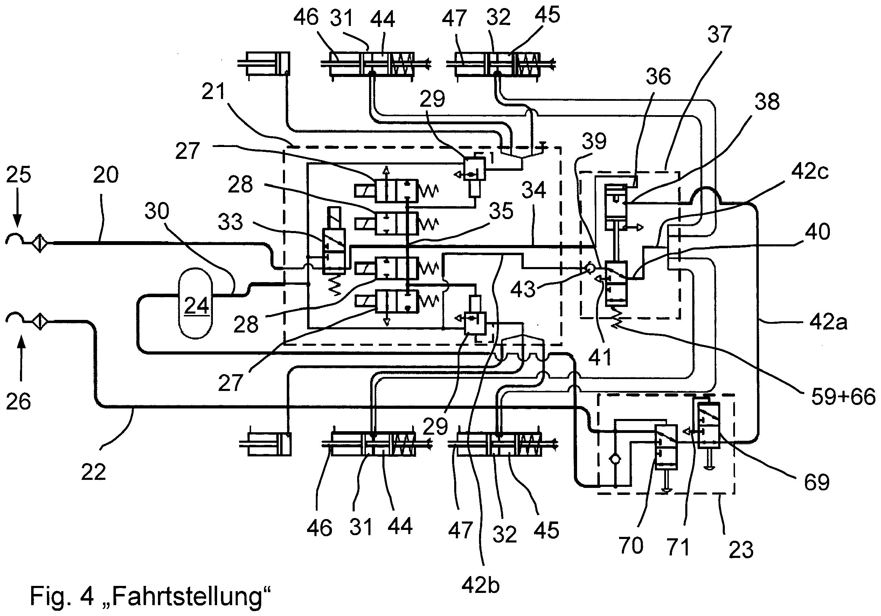

Es wird zunächst Bezug genommen auf Fig. 4 mit der Darstellung einer pneumatischen Bremsanlage für ein Anhängefahrzeug. Eine Steuerdruckleitung 20 führt zu einem Anhängerbremsmodul 21. Eine Vorratsdruckleitung 22 führt zu einem Parklöseventil 23 und von diesem weiter über einen Vorratsbehälter 24 zum Anhängerbremsmodul 21. Entsprechend der gesetzlichen Vorschriften weist die Steuerdruckleitung 20 einen gelben Kupplungskopf 25 für einen Steueranschluss auf und die Vorratsdruckleitung 22 einen roten Kupplungskopf 26 für einen Versorgungsanschluss.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander.

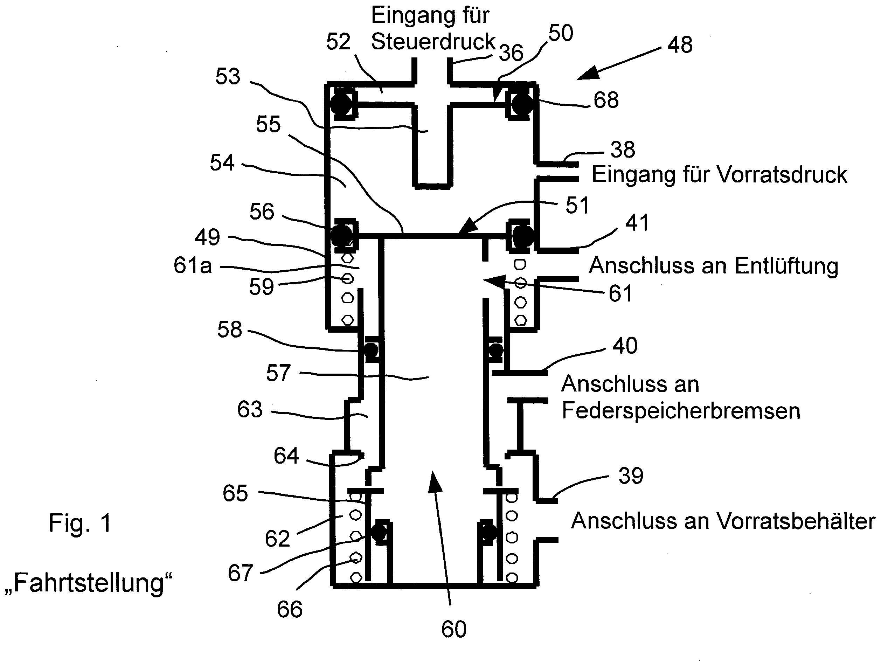

Weiterhin verbindet die Leitung 34 (bei entsprechend geschaltetem Redundanzventil 33) die Steuerdruckleitung 20 mit einem ersten Steuereingang 36 einer Ventilanordnung 37. Die Ventilanordnung 37 hat insbesondere die Funktion eines Überlastschutzes und weist hierzu noch einen zweiten Steuereingang 38 sowie einen ersten Anschluss 39, einen zweiten Anschluss 40 und einen dritten Anschluss 41 auf, siehe auch Fig. 1 bis 3.

Der zweite Steuereingang 38 ist über eine Leitung 42a und das Parklöseventil 23 an die Vorratsdruckleitung 22 angeschlossen. Der erste Anschluss 39 ist über eine Leitung 42b, ein Rückschlagventil 43 und das Anhängerbremsmodul 21 mit dem Vorratsbehälter 24 verbunden. Der zweite Anschluss 40 ist über eine Leitung 42c und Verzweigungen mit Federspeicher-Bremszylindern 44, 45 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 44, 45, wobei die Kräfte beim Betätigen der Betriebsbremse einerseits und von Federspeichern andererseits auf denselben Bremskolben 46, 47 wirken.

Die Ventilanordnung 37 beinhaltet eine Ventileinheit 48 nach Art eines Doppelkolben-Ventils, siehe Fig. 1-3, hier mit einem Gehäuse 49, in dem zum Steuern der Ventilfunktionen zwei Kolben 50, 51 koaxial bewegbar sind. In einem oberen, ersten Zylinderraum 52 ist der erste Kolben 50 durch über den Steuereingang 36 zugeführten Steuerdruck abwärts in Richtung auf den zweiten Kolben 51 bewegbar. Dabei weist der erste Kolben 50 einen abwärtsgerichteten Fortsatz 53 mit verringertem Durchmesser auf, so dass um den Fortsatz 53 und darunter ein zweiter Zylinderraum 54 gebildet ist. Der zweite Steuereingang 38 führt in den zweiten Zylinderraum 54 zwischen den beiden Kolben 50, 51. Durch den Fortsatz 53 weisen die beiden Kolben 50, 51 stets einen Mindestabstand zueinander auf, so dass der zweite Steuereingang 38 durch die Kolben 50, 51 nicht verschließbar ist.

Der zweite Kolben 51 ist gestuft ausgebildet, mit einem breiten Kopf 55 mit Dichtung 56 und einem schmaleren Fortsatz 57 mit Dichtung 58. Der Kopf 55 liegt randseitig an einer Druckfeder 59 an, die den zweiten Kolben 51 in Richtung auf den ersten Kolben 50 drückt.

Der Fortsatz 57 des zweiten Kolbens 51 ist hohl und nach unten mit einer Öffnung 60 sowie nahe dem Kopf 55 auch seitlich mit einer Öffnung 61 versehen. Die beiden Öffnungen 60, 61 sind au ßenseitig durch die Dichtung 58 gegeneinander abgeschlossen bzw. voneinander getrennt. Im Bereich der Öffnung 61 ist um den Fortsatz 57 herum ein Ringraum 61a gebildet, welcher zusätzlich zur Öffnung 61 noch den dritten Anschluss 41 als Öffnung aufweist und im Übrigen durch die Dichtungen 56, 58 abgeschlossen ist.

Das Gehäuse 49 weist in seinem unteren Bereich einen breiteren untersten, ringförmigen Zylinderraum 62 und darüber einen etwas schmaleren, ringförmigen Zylinderraum 63 auf. Der zweite Anschluss 40 ist zugleich eine Öffnung des Zylinderraums 63 und der erste Anschluss 39 ist eine Öffnung des Zylinderraums 62.

An einem Übergang zwischen den beiden Zylinderräumen 62, 63 ist eine innen umlaufende Kante 64 gebildet, gegen die ein im untersten Zylinderraum 62 gehaltener Hilfskolben 65 mittels einer Druckfeder 66 aufwärts drückt. Die Druckfeder 66 ist relativ schwach ausgebildet und bewirkt lediglich, dass der Hilfskolben 65, sofern nicht weitere Kräfte wirken, an der umlaufenden Kante 64 anliegt und dort den untersten Zylinderraum 62 abschließt. Der Hilfskolben 65 ist vorzugsweise an beiden axialen Enden offen und innenseitig auf einer Dichtung 67 geführt.

Der erste Kolben 50 weist außenseitig eine umlaufende Dichtung 68 auf. Der Fortsatz 57 des zweiten Kolbens 51 ist im Zylinderraum 63 mit der au ßenseitigen Dichtung 58 geführt.

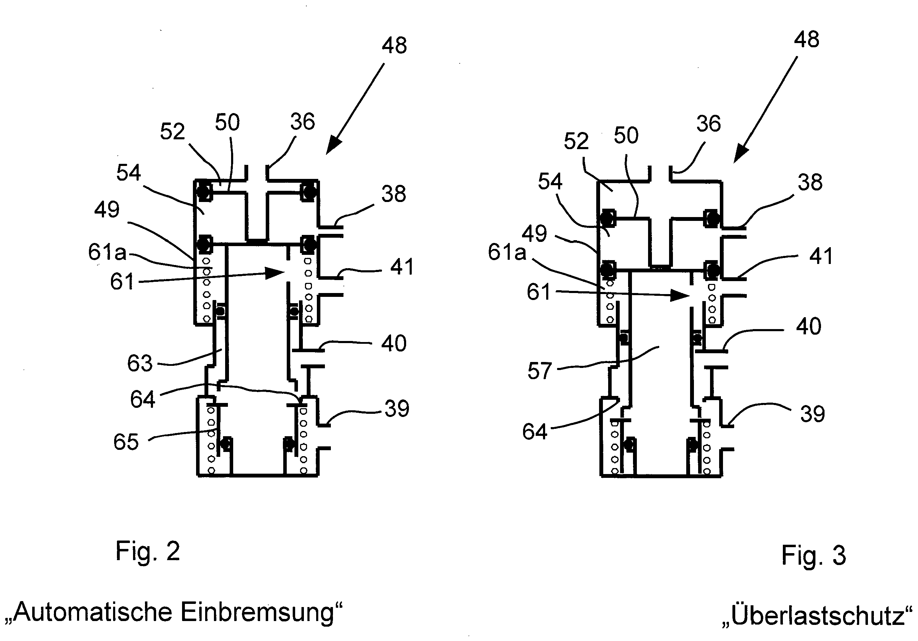

Die Richtungsangaben "oben" und "unten" beziehen sich auf die Ausrichtung der Ventileinheit 48 in den Figuren. In der Praxis kann die Ventileinheit 48 eine andere Lage einnehmen, so dass die Richtungsangaben anzupassen sind. Die Ventileinheit 48 ist hier als 3/2-Wegeventil ausgeführt, mit einer oberen Schaltstellung in den Figuren 2, 5, 6 und einer unteren Schaltstellung in den Fig. 1, 3, 4, 7. Durch die Konstruktion der Ventileinheit 48 sind die Funktionen der in Fig. 4 sichtbaren Ventilanordnung 37 in einem Gehäuse (im Gehäuse 49) vereint. Nachfolgend werden die Funktionen der Ventilanordnung 37 anhand der Fig. 4 - 7 erläutert:
In Fahrtstellung gemäß Fig. 4 ist die pneumatische Bremsanlage in Bereitschaft. Das heißt, die Federspeicher-Bremszylinder 44, 45 sind durch Vorratsbehälterdruck aus dem Vorratsbehälter 24 belüftet. Hierzu ist der erste Anschluss 39 mit dem zweiten Anschluss 40 über die Ventilanordnung 37 verbunden. Die Ventilanordnung 37 befindet sich in einer aktiv geschalteten, zweiten Schaltstellung. Ausgelöst ist diese zweite Schaltstellung durch den am zweiten Steuereingang 38 anliegenden Vorratsdruck von mindestens 2,5 bar auf der Vorratsdruckleitung 22. Der Vorratsdruck wird hierzu von der Vorratsdruckleitung 22 durch das Parklöseventil 23 und durch die Leitung 42a bis zum zweiten Steuereingang 38 geführt. Der dort anliegende Vorratsdruck beaufschlagt den zweiten Kolben 51, so dass die Ventileinheit 48 die Fahrtstellung gemäß Fig. 1 einnimmt. Dabei liegt am ersten Steuereingang 36 kein Druck an, der erste Kolben 50 wird nicht beaufschlagt und befindet sich in seiner oberen Stellung. Da außerdem kein Steuerdruck aus der Steuerdruck-Leitung 20 anliegt, sind auch die Bremszylinder 30, 31, 32 unbelüftet.

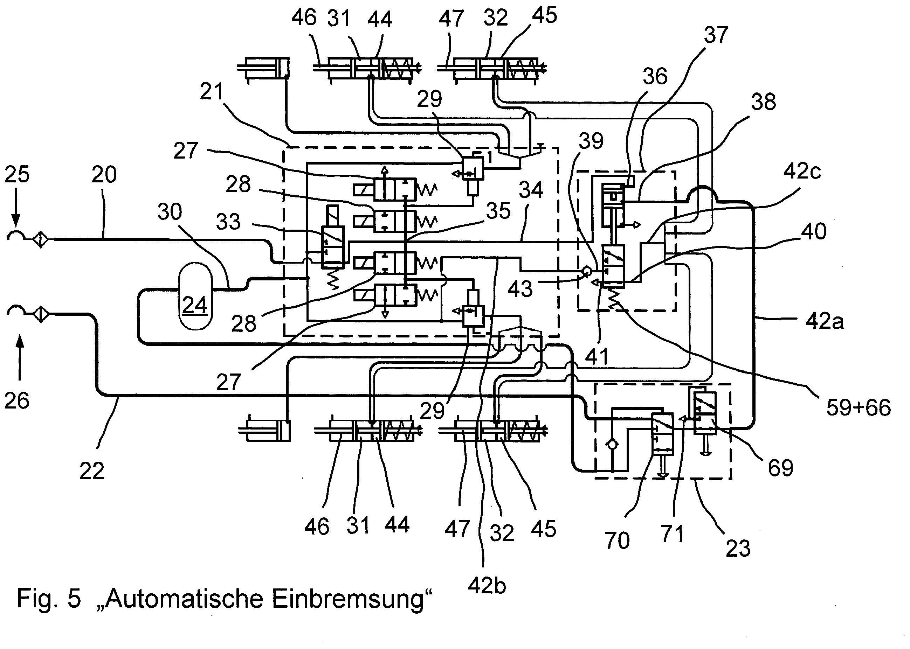

Fig. 5 zeigt die Bestandteile der pneumatischen Bremsanlage nach einer automatischen Einbremsung des Anhängefahrzeugs durch Verlust des Vorratsdrucks in der Vorratsdruckleitung 22, etwa durch Abriss des roten Kupplungskopfes 26.

Drucklos ist dann auch der zweite Steuereingang 38, ebenso der erste Steuereingang 36 ohne Betätigung der Betriebsbremsen. Entsprechend sind beide Zylinderräume 52, 54 entlüftet und beide Kolben 50, 51 durch Druck der Feder 59 nach oben bewegt, siehe auch Fig. 2. Im Gegensatz zu Fig. 4 befindet sich in Fig. 5 die Ventilanordnung 37 in einer oberen Schaltstellung. Der erste Anschluss 39 ist abgesperrt. Der zweite Anschluss 40 ist zur Entlüftung der Federspeicher-Bremszylinder 44, 45 mit dem dritten Anschluss 41 verbunden. Die Federspeicher-Bremszylinder 44, 45 sind entlüftet und das Anhängefahrzeug wird abgebremst oder ist eingebremst. Die Betriebsbremsen sind inaktiv.

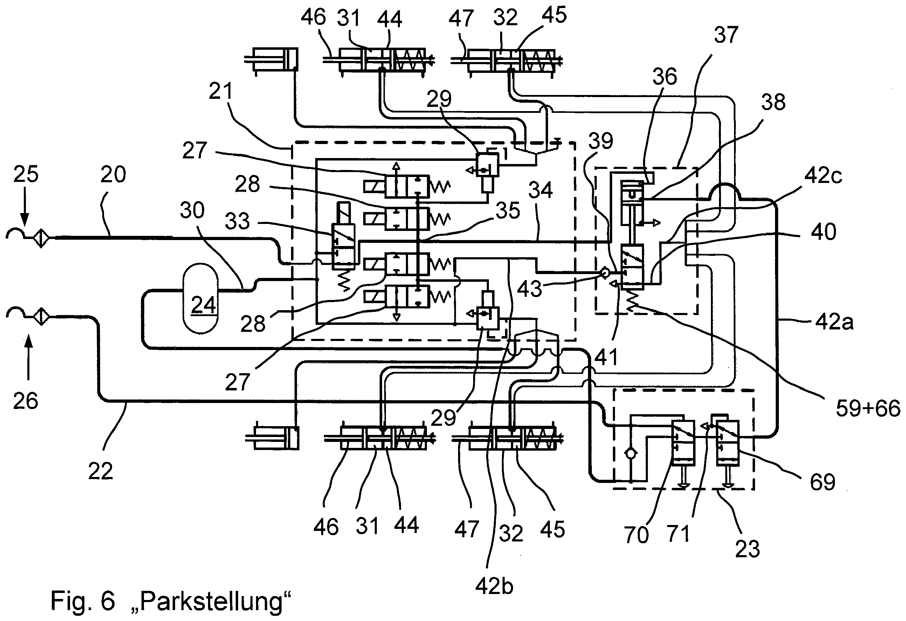

In Fig. 6 ist eine Parkstellung der pneumatischen Bremsanlage gezeigt. Die Ventilanordnung 37 nimmt dieselbe Schaltstellung ein wie in Fig. 5 beim automatischen Einbremsen nach Verlust des Vorratsdrucks in der Vorratsdruckleitung 22. In Fig. 6 kann der Vorratsdruck jedoch weiterhin in der Vorratsdruckleitung 22 vorhanden sein. Der Druckverlust am zweiten Steuereingang 38 wird stattdessen erzielt durch Umschaltung des Parklöseventils 23. Dieses beinhaltet zumindest zwei Ventile, nämlich ein Parkventil 69 und ein Löseventil 70. Das Löseventil 70 befindet sich in allen hier dargestellten Zuständen in der gleichen Schaltposition. Demgegenüber befindet sich das Parkventil 69 in den Fig. 4 und 5 in einer Fahrtstellung und nur in Fig. 6 in einer Parkstellung. Dadurch ist der zweite Steuereingang 38 mit einer Entlüftung 71 am Parkventil 69 verbunden und somit drucklos. Die Betriebsbremse ist inaktiv. Der erste Steuereingang 36 ist ebenfalls drucklos. Die Zylinderräume 52, 54 sind entlüftet. Die Ventilanordnung nimmt dieselbe Stellung ein wie beim automatischen Einbremsen in Fig. 5. Dadurch ist der zweite Anschluss 40 mit dem dritten Anschluss 41 zur Entlüftung der Federspeicher-Bremszylinder verbunden. Das Fahrzeug ist gebremst.

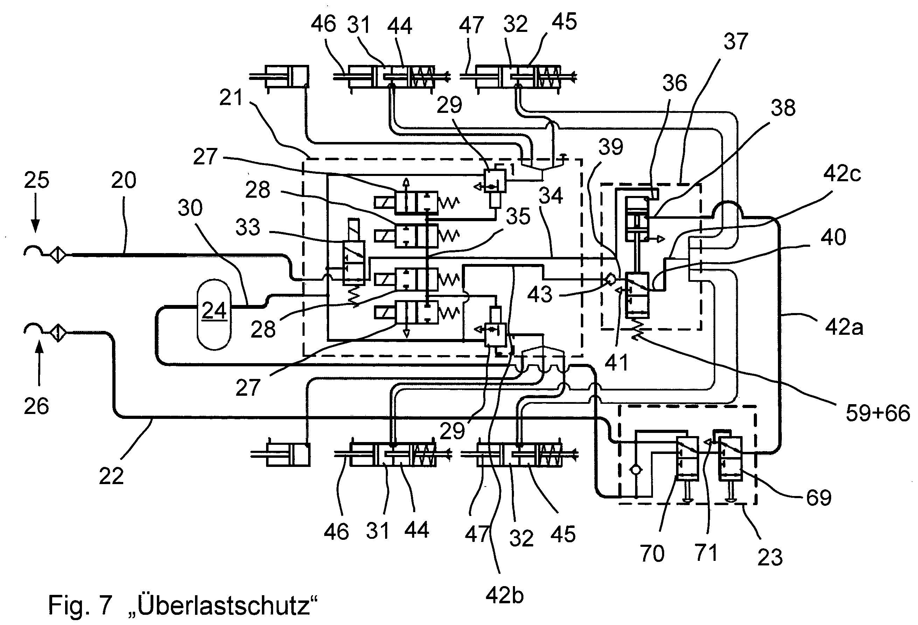

In Fig. 7 ist die Funktion der Ventilanordnung 37 als Überlastschutz erkennbar. Vermieden werden soll eine Doppelbelastung innerhalb der Betriebsbremszylinder 30, 31 und 32 durch Betätigung der Betriebsbremse einerseits und durch die Kraft der entlüfteten Federspeicher-Bremszylinder 44, 45 andererseits. Ausgegangen wird von der Parkstellung gemäß Fig. 6 mit geschaltetem Parkventil 69. Gemäß Fig. 7 liegt zusätzlich Steuerdruck in der Steuerdruck-Leitung 20 an. Dieser regelt über die Magnetventile 27, 28 und Relaisventile 29 die Zufuhr des Vorratsbehälterdrucks aus dem Vorratsbehälter 24 zu den Betriebsbremszylindern 31, 32. Je mehr Steuerdruck eingesteuert wird, umso höher sind die zusätzlichen mechanischen Kräfte innerhalb der Betriebsbremszylinder 31, 32. Da die Federspeicher-Bremszylinder 44, 45 bereits entlüftet sind, können die Kräfte insgesamt zu stark werden. Der Steuerdruck wird außerdem über den ersten Steuereingang 36 in den Zylinderraum 52 geführt, siehe Fig. 3. Je nach Härte und Kennlinie der Druckfeder 59 (und der Druckfeder 66) schaltet die Ventilanordnung 37 aus der Parkstellung gemäß Fig. 5 in die Stellung gemäß Fig. 7. Dadurch wird der erste Anschluss 39 mit dem zweiten Anschluss 40 verbunden und die Federspeicher-Bremszylinder 44, 45 werden mit Druck aus dem Vorratsbehälter 24 belüftet. Im Ergebnis sind nur noch die Betriebsbremsen wirksam. Sobald der Steuerdruck wieder nachlässt, schaltet die Ventilanordnung 37 in die Stellung gemäß Fig. 6 zurück und die Federspeicher-Bremszylinder 44,45 werden wieder entlüftet.

Bei dem anhand der Fig. 7 dargestellten Überlastschutz erfolgt die Belüftung und Entlüftung der Federspeicher-Bremszylinder 44, 45 nicht proportional zur Veränderung des Steuerdrucks. Vielmehr werden die Federspeicher-Bremszylinder 44, 45 in Abhängigkeit von der Überschreitung oder Unterschreitung eines Steuerdruck-Grenzwerts entlüftet oder belüftet. Der Grenzwert beträgt hier 2,5 bar oder mehr. Der Überlastschutz ist auch wirksam ausgehend vom in Fig. 5 (automatische Einbremsung) gezeigten Zustand.

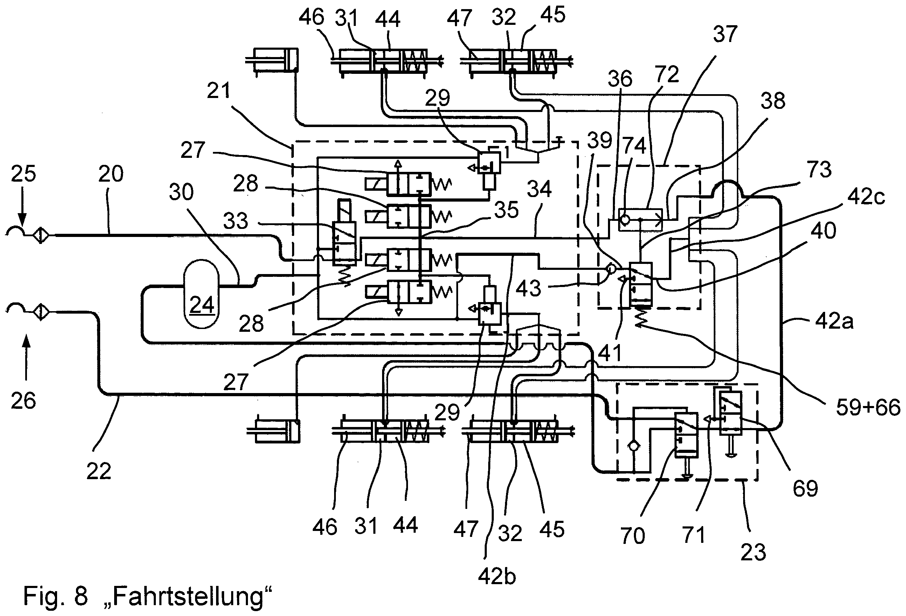

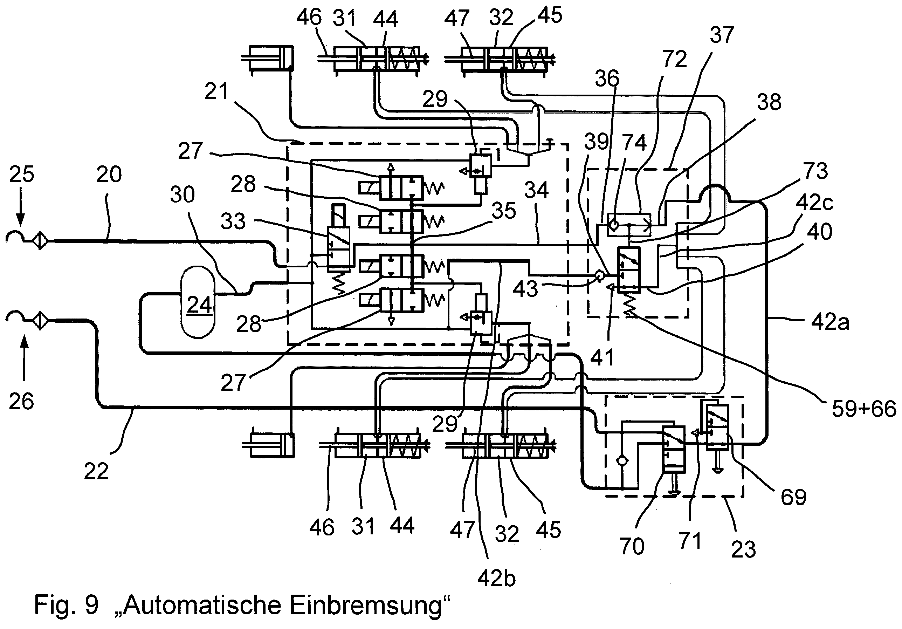

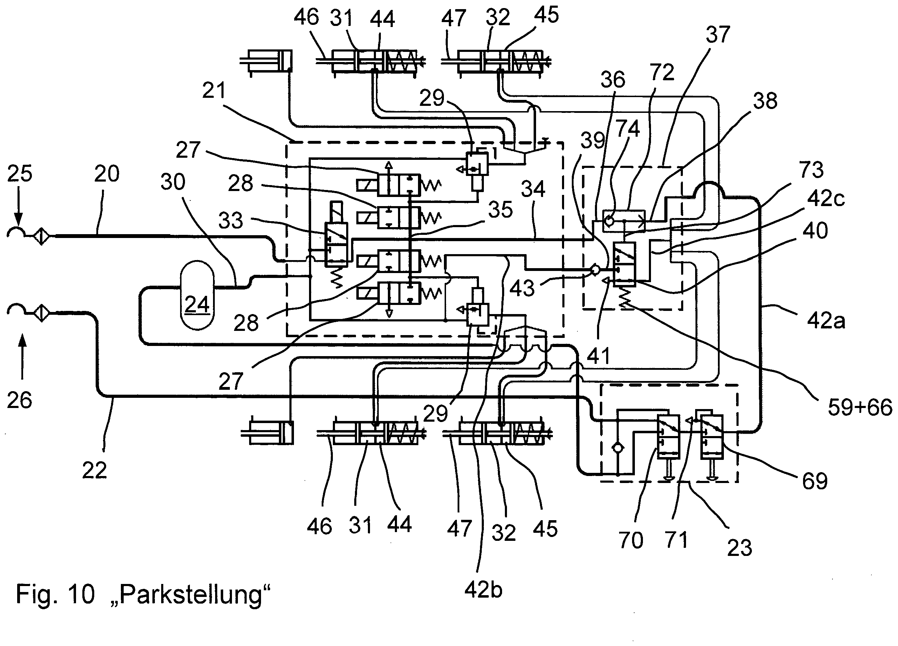

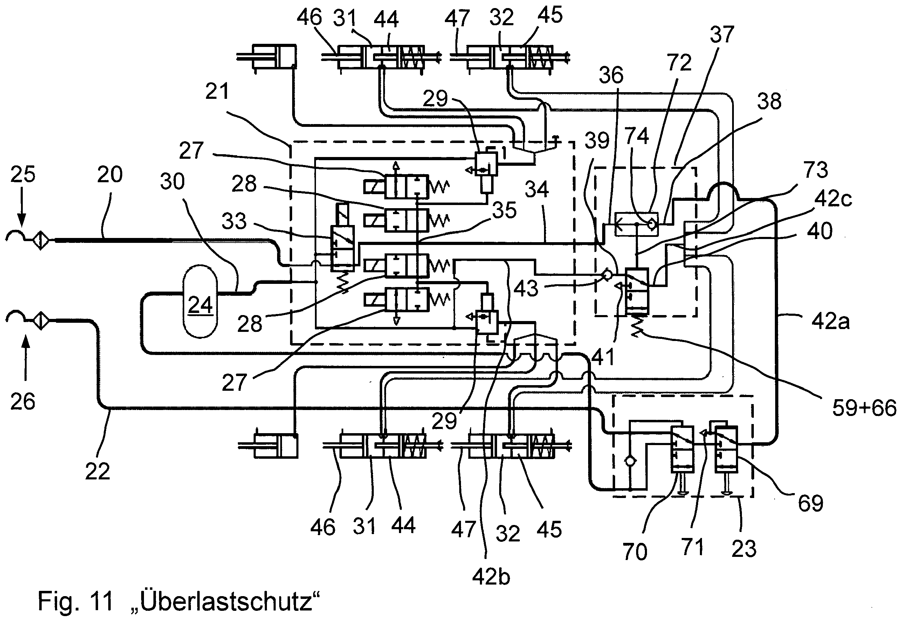

Die Fig. 8 - 11 beziehen sich wie die Fig. 4 - 7 auf die verschiedenen Zustände Fahrtstellung (Fig. 8), automatische Einbremsung (Fig. 9), Parkstellung (Fig. 10) und Überlastschutz (Fig. 11). Im Unterschied zu den Fig. 4 - 7 ist die Ventilanordnung 37 in anderer Weise ausgebildet, nämlich nicht mit einem Doppelkolben-Ventil, sondern mit einem zusätzlichen Select-High-Ventil 72 zur Steuerung der beiden Zustände der Ventilanordnung 37 und der Verbindung der Anschlüsse 39, 40, 41. Das Select-High-Ventil 72 lässt den höheren der an den beiden Steuereingängen 36, 38 anliegenden Druck zu einem dritten Steuereingang 73 durch. In Abhängigkeit von dem hier anliegenden Druck nimmt die Ventilanordnung 37 die zugehörige Schaltstellung ein. Eine Umsetzung in die Praxis ist möglich als 3/2-Wegeventil und durch Abwandlung der Ventileinheit 48 in den Fig. 1 - 3. Der erste Kolben 50 entfällt, der Steuereingang 38 bleibt geschlossen und der Steuereingang 36 wird ersetzt durch den dritten Steuereingang 73. Dieser wird gespeist aus dem Select-High-Ventil 72.

Das Select-High-Ventil 72 enthält zwischen den Steuereingängen 36, 38 eine Rückschlagfunktion, so dass der jeweils anliegende höhere Druck nur in den Steuereingang 73 gelangen und nicht über den Steuereingang mit dem niedrigeren Druck entweichen kann. Das Vorzeichen der Druckdifferenz an den Steuereingängen 36, 38 ist in den Fig. 8 - 11 anhand der Position einer Kugel 74 erkennbar. In Fig. 8 (Fahrtstellung) liegt am Steuereingang 38 Vorratsdruck an, während am Steuereingang 36 ein geringerer oder kein Steuerdruck anliegt. In Fig. 9 (automatische Einbremsung) wird der Steuereingang 38 aus der Fahrtstellung heraus durch Abriss der Vorratsdruckleitung 22 drucklos, während der Steuereingang 36 ohnehin drucklos ist. Die Kugel 74 bleibt vor dem Steuereingang 36, bis auch am Steuereingang 38 kein Druck mehr anliegt.

In Fig. 10 (Parkstellung) ist ebenfalls die Fahrtstellung gemäß Fig. 8 Ausgangspunkt der Überlegungen. In Fahrtstellung liegt am Steuereingang 38 der volle Vorratsdruck an (wie in Fig. 8). Das Fahrzeug wird mittels der Betriebsbremsen durch Regelung des Steuerdrucks gebremst. In Parkstellung werden die Betriebsbremsen grundsätzlich nicht betätigt, d. h. am Steuereingang 36 liegt kein Druck mehr an und zugleich ist der Steuereingang 38 über das Parkventil 69 entlüftet. Bis zur endgültigen Entlüftung des Steuereingangs 38 bleibt die Kugel 74 in der Position gemäß Fig. 10, also links. Die Federspeicher-Bremszylinder 44,45 sind entlüftet, die Federspeicherbremsen halten das Anhängefahrzeug.

Ausgehend von der Parkstellung gemäß Fig. 10 ergibt sich die Stellung gemäß Fig. 11 (Überlastschutz) bei Betätigung der Betriebsbremse während der Parkstellung. Es ist dann am Steuereingang 36 Steuerdruck wirksam. Die Kugel 74 wandert in die rechte Position gemäß Fig. 11 und der Steuerdruck gelangt in den Steuereingang 73 zum Umschalten der Ventilanordnung 37.

Der Überlastschutz wurde bisher nur ausgehend von der Parkstellung gemäß den Fig. 6 und 10 erläutert. Ein Überlastschutz besteht auch ausgehend von einer automatischen Einbremsung (Fig. 5 und 9). Wenn nämlich nach automatischer Einbremsung die Betriebsbremse betätigt wird, gelangt Steuerdruck zum ersten Steuereingang 36. Der zweite Steuereingang 38 kann dabei drucklos bleiben. Die Ventilanordnung 37 schaltet um in die in den Fig. 7 und 11 gezeigte Stellung mit Belüftung der Federspeicher-Bremszylinder 44, 45.

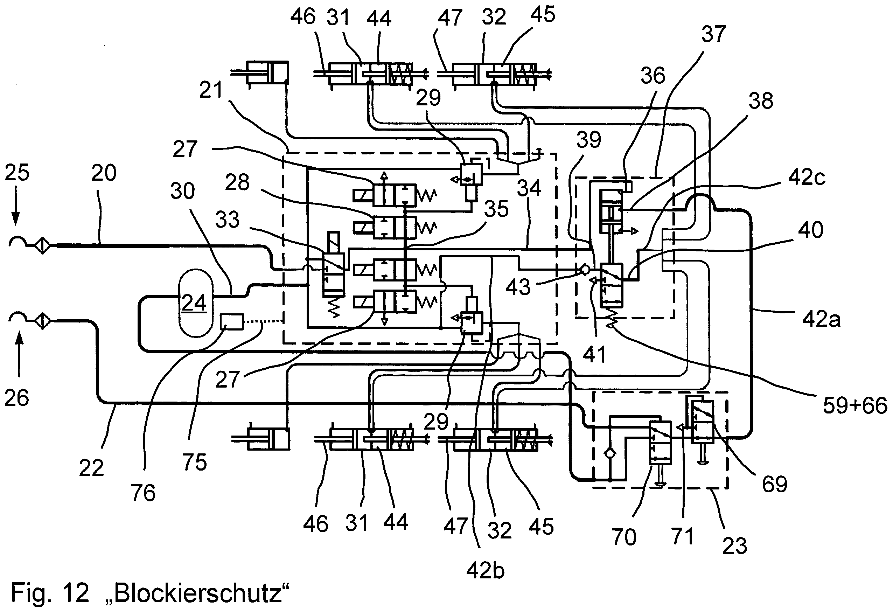

Eine weitere Besonderheit zeigt Fig. 12. Ausgegangen wird von einer automatischen Einbremsung (Fig. 5 und 9). Der zweite Steuereingang 38 ist drucklos durch Abriss der Vorratsdruckleitung 22. Das Anhängefahrzeug wird durch die Federspeicher-Bremszylinder 44, 45 stark abgebremst. Die Räder können blockieren. Die üblicherweise vorhandene Antiblockierregelung für die Betriebsbremse ist nicht wirksam. Um nun eine Antiblockierregelung über das Anhängerbremsmodul 21 zu ermöglichen, schaltet das Redundanzventil 33 aus der Position der Fig. 4 -11 in die Position gemäß Fig. 12. Dadurch gelangt nicht mehr der Steuerdruck über das Redundanzventil 33 zum ersten Steuereingang 36, sondern über die Leitung 30 Vorratsbehälterdruck aus dem Vorratsbehälter 24. Entsprechend schaltet die Ventilanordnung 37 in die Stellung gemäß Fig. 12, so dass der Vorratsbehälterdruck auch zum zweiten Anschluss 40 gelangt und die Federspeicher-Bremszylinder 44, 45 belüften kann. Das Anhängefahrzeug kann nun über die eigenen Betriebsbremsen (Betriebsbremszylinder 31, 32) mit Vorratsbehälterdruck aus dem Vorratsbehälter 24 eingebremst werden. Dabei ist die im Anhängerbremsmodul 21 üblicherweise vorhandene Antiblockierregelung wirksam.

Der pneumatischen Bremsanlage ist ein elektronisches Bremssystem zugeordnet. Bestandteil des elektronischen Bremssystems ist ein Bremsensteuergerät, welches hier nicht gezeigt ist und welches in das Anhängerbremsmodul 21 integriert ist oder zusätzlich vorhanden sein kann. Das Bremsensteuergerät erhält Zustandsinformationen in an sich bekannter Weise über Sensoren an der pneumatischen Bremsanlage und steuert die Funktionen des Anhängerbremsmoduls 21. Beispielsweise werden Steuerdruck und Vorratsdruck überwacht, hier vorzugsweise auch die Stellung der Ventilanordnung 37. Bei plötzlichem Verlust des Drucks in der Vorratsdruckleitung 22 und ausreichendem Druck im Vorratsbehälter 24 kann das Bremsensteuergerät das Redundanzventil 33 umschalten in die Position gemäß Fig. 12 und zugleich eine Notbremsung mit Blockierschutz über das Anhängerbremsmodul 21 mit Regelung der Ventile 27, 28 veranlassen. Nur wenn der Vorratsbehälter 24 nicht mehr ausreichenden Druck aufweist, wird das Redundanzventil 33 nicht zum Umschalten angesteuert, so dass eine automatische Bremsung durch die Federspeicher-Bremszylinder 44, 45 stattfindet.

An das Bremsensteuergerät im Anhängerbremsmodul 21 ist über eine Leitung 75 ein Längsverzögerungssensor 76 angeschlossen. Dessen Signale werden im Bremsensteuergerät verarbeitet. Vorzugsweise schaltet das Redundanzventil 33 nur in die Position gemäß Fig. 12 um, wenn die Längsverzögerung einen Grenzwert überschreitet. Der Längsverzögerungssensor 76 kann auch in das Bremsensteuergerät bzw. in das Anhängerbremsmodul 21 integriert sein.

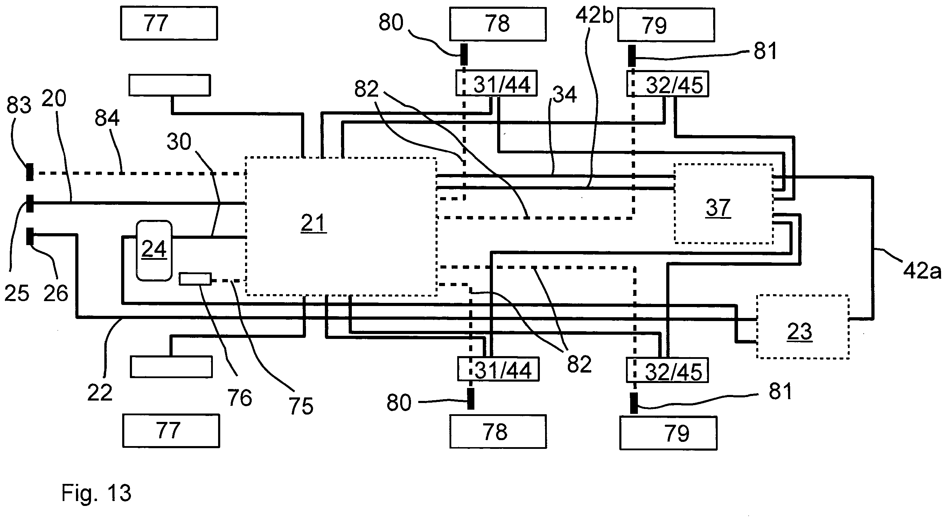

In Fig. 13 sind die in den übrigen Figuren sichtbaren Details des Anhängerbremsmoduls 21, der Ventilanordnung 37 und des Parklöseventils 23 nicht eingezeichnet. Stattdessen sind andere Details der pneumatischen Bremsanlage des Anhängefahrzeugs sichtbar:
Drei nicht näher gezeigte Achsen tragen je zwei Räder 77, 78, 79. Den Rädern 78, 79 der beiden hinteren Achsen sind jeweils Drehzahlsensoren 80, 81 zugeordnet. Deren Signale werden über Signalleitungen 82 dem Anhängerbremsmodul 21 zugeführt und im dort integrierten Steuergerät verarbeitet.

Anhängefahrzeug und Zugfahrzeug sind über eine elektrische Leitung miteinander verbunden. Hierzu ist parallel zu den Kupplungsköpfen 25, 26 eine elektrische Schnittstelle 83 vorgesehen. Von dieser führt eine elektrische Leitung 84 zum Anhängerbremsmodul 21. Integriert in die elektrische Leitung 84 ist eine elektrische Bremsleitung nach ISO-11992, mit der ein Bremswunsch des Fahrers vom Zugfahrzeug zum Anhängefahrzeug übermittelt wird.

Das Steuergerät im Anhängerbremsmodul 21 ermittelt aufgrund der über die elektrische Bremsleitung übersandten Signale einerseits und die Signale der Raddrehzahlsensoren 80, 81 einerseits, ob ein Bremswunsch vorliegt und/oder mindestens ein Rad bei Fahrt des Anhängefahrzeugs blockiert. Wenn kein Bremswunsch vorliegt und mindestens ein Rad bei Fahrt blockiert, regelt das Steuergerät die pneumatische Bremsanlage derart, dass die Federspeicher-Bremszylinder 44, 45 belüftet werden und automatisch die Betriebsbremsen mit Antiblockierregelung zur Ausführung einer Vollbremsung aktiviert werden. Da das Steuergerät die Bremsung ausführt und der Fahrer nicht beteiligt ist, kann die Bremsung auch nach einem im Steuergerät hinterlegten Programm mit geringerer Bremskraft als bei einer Vollbremsung ausgeführt werden.

## Patentansprüche

1. Verfahren zum Regeln von Bremsen in einem Anhängefahrzeug mit pneumatischer Bremsanlage, Betriebsbremsen und elektronischem Bremssystem mit Antiblockier-Regelung,
wobei mindestens eine Achse des Anhängefahrzeugs mit Federspeicher-Bremsen und Drehzahlsensoren bestückt ist, und wobei die pneumatische Bremsanlage insbesondere einen Vorratsbehälter (24) mit Vorratsbehälterdruck aufweist, wobei
a) das elektronische Bremssystem überwacht, ob ein Bremswunsch vorliegt,
b) das elektronische Bremssystem überwacht, ob mindestens ein Rad (78, 79) der mindestens einen Achse blockiert,
c) wenn kein Bremswunsch vorliegt und mindestens ein Rad (78, 79) der mindestens einen Achse bei Fahrt blockiert, regelt das elektronische Bremssystem die pneumatische Bremsanlage derart, dass die Federspeicher-Bremsen belüftet werden und das Anhängefahrzeug durch die Betriebsbremsen automatisch und mit Antiblockierregelung gebremst wird, **dadurch gekennzeichnet, dass** eine pneumatisch angesteuerte Ventileinheit (48) die Federspeicher-Bremsen mit dem Vorratsbehälterdruck belüftet, wenn an einem Steuereingang der Ventileinheit (48) ein Steuerdruck oberhalb eines Grenzwerts anliegt, und dass zum Auslösen der Belüftung der Federspeicher-Bremsen dem Steuereingang der Ventileinheit (48) der Vorratsbehälterdruck zugeführt wird.

2. Verfahren nach Anspruch 1, **dadurch gekennzeichnet, dass** ein Bremswunsch vorliegt, wenn in einer pneumatischen Steuerdruckleitung (22) im Anhängefahrzeug oder in einem Zugfahrzeug des Anhängefahrzeugs ein Druck oberhalb eines Grenzwerts gemessen wird oder wenn auf einer elektrischen Bremsleitung ein Signal zur Betätigung der Betriebsbremse übermittelt wird.

3. Verfahren nach Anspruch 1 oder 2, **dadurch gekennzeichnet, dass** das Anhängefahrzeug bis zum Stillstand abgebremst wird.

4. Verfahren nach Anspruch 1 oder einem der weiteren Ansprüche, **dadurch gekennzeichnet, dass** eine Längsverzögerung des Anhängefahrzeugs überwacht wird und dass nur dann das Anhängefahrzeug automatisch gebremst wird und die Federspeicher-Bremsen belüftet werden, wenn die Längsverzögerung einen Grenzwert überschreitet.

5. Ventilanordnung (37) für eine pneumatische Bremsanlage eines Anhängefahrzeugs, insbesondere in Verbindung mit einem elektronischen Bremssystem, wobei die pneumatische Bremsanlage einen Vorratsbehälter (24) mit Vorratsbehälterdruck aufweist,
mit einer pneumatisch angesteuerten Ventileinheit (48) zum Belüften von Federspeicherbremsen mit Vorratsbehälterdruck, sofern an einem Steuereingang (36) der Ventileinheit (48) ein Druck oberhalb eines Grenzwerts anliegt, und mit einem Magnetventil (33), welches einerseits an einen Steuerdruck der pneumatischen Bremsanlage und an den Vorratsbehälterdruck angeschlossen und zwischen Steuerdruck und Vorratsbehälterdruck umschaltbar ist, und welches andererseits mit dem Steuereingang (36) der Ventileinheit (48) verbunden ist, so dass am Steuereingang (36) der Ventileinheit (48), je nach Stellung des Magnetventils, Steuerdruck oder Vorratsbehälterdruck anliegen.

6. Anhängefahrzeug mit pneumatischer Bremsanlage, elektronischem Bremssystem und einer Ventilanordnung (37) nach Anspruch 5.

7. Elektronisches Steuergerät zur Durchführung des Verfahrens nach einem der Ansprüche 1 bis 4, zur Steuerung einer Ventilanordnung (37) nach Anspruch 5 und/oder für ein Anhängefahrzeug nach Anspruch 6.

## Claims

1. A method for controlling brakes in a trailer vehicle, wherein the trailer vehicle comprises a pneumatic brake system, service brakes and an electronic brake system with anti-lock control,
wherein at least one axle of the trailer vehicle is fitted with spring-loaded brakes and revolution rate sensors, and wherein the pneumatic brake system further comprises a reservoir container (24) with a reservoir container pressure, wherein
a) the electronic brake system monitors whether there is a braking demand,
b) the electronic brake system monitors whether at least one wheel (78, 79) of at least one axle is locking up,
c) if there is no braking demand and at least one wheel (78, 79) of the at least one axle is locked while traveling, the electronic brake system controls the pneumatic braking system such that the spring-loaded brakes are ventilated and the trailer vehicle is automatically braked by the service brakes with anti-lock control, **characterized in that** a pneumatically actuated valve unit (48) pressurizes the spring-loaded brakes with the reservoir container pressure if a control pressure above a limit value is applied to a control input of the pneumatically actuated valve unit (48), and the reservoir container pressure is delivered to the control input of the pneumatically actuated valve unit (48) for triggering the pressurization of the spring-loaded brakes.

2. The method according to claim 2, **characterized in that** the braking demand exists if a pressure above a limit value is measured in a pneumatic control pressure line (22) in the trailer vehicle or in a towing vehicle of the trailer vehicle or if a signal for actuation of the service brakes is transmitted on an electric brake line.

3. The method according to claim 1 or 2, **characterized in that** the trailer vehicle is decelerated to a standstill.

4. The method according to claim 1 or any of the further claims, **characterized in that** a longitudinal deceleration of the trailer vehicle is monitored and the trailer vehicle is automatically braked and the spring-loaded brakes are pressurized only if the longitudinal deceleration exceeds a limit value.

5. A valve arrangement (37) for a pneumatic brake system of a trailer vehicle, in particular in conjunction with an electronic brake system, wherein the pneumatic brake system the pneumatic brake system comprises a reservoir container (24) with a reservoir container pressure, the pneumatic brake system comprising a reservoir container with a reservoir container pressure, said valve arrangement comprising a pneumatically actuated valve unit (48) for pressurizing spring-loaded brakes with the reservoir container pressure if a pressure above a limit value is applied to a control input (36) of the pneumatically actuated valve unit (48), and comprising a solenoid valve (33), the solenoid valve being connected to a control pressure of the pneumatic brake system and to the reservoir container pressure, wherein the solenoid valve is switchable between the control pressure of the pneumatic brake system and the reservoir container pressure, and wherein the solenoid valve is connected to the control input (36) of the valve unit (48), such that the control pressure of the pneumatic brake system or the reservoir container pressure is applied to the control input (36) of the valve unit (48) depending on a position of the solenoid valve.

6. A trailer vehicle with a pneumatic brake system, an electronic brake system and a valve arrangement (37) according to claim 5.

7. An electronic control unit for carrying out the method according to any of claims 1 to 4, for controlling a valve arrangement (37) according to claim 5 and/or for a trailer vehicle according to claim 6.

## Revendications

1. Procédé permettant la régulation de freins dans un véhicule tracté avec un système de freinage pneumatique, des freins de service et un système de freinage électronique à régulation antiblocage des roues,
dans lequel au moins un essieu du véhicule tracté est équipé de freins à ressort et de capteurs de vitesse de rotation, et dans lequel le système de freinage pneumatique présente en particulier un réservoir de stockage (24) avec une pression de réservoir de stockage, dans lequel
a) le système de freinage électronique surveille si un souhait de freinage est présent,
b) le système de freinage électronique surveille si au moins une roue (78, 79) de l'au moins un essieu se bloque,
c) si aucun souhait de freinage n'est présent et au moins une roue (78, 79) de l'au moins un essieu se bloque pendant la marche, le système de freinage électronique régule le système de freinage pneumatique de telle sorte que les freins à ressort sont aérés et le véhicule tracté est freiné automatiquement par les freins de service et avec régulation antiblocage des roues, **caractérisé en ce qu'**une unité soupape (48) à commande pneumatique aère les freins à ressort avec la pression de réservoir de stockage lorsqu'une pression de commande au-dessus d'une valeur limite s'applique contre une entrée de commande de l'unité soupape (48), et que, pour le déclenchement de l'aération des freins à ressort, la pression de réservoir de stockage est amenée à l'entrée de commande de l'unité soupape (48).

2. Procédé selon la revendication 1, **caractérisé en ce qu'**un souhait de freinage est présent lorsqu'une pression au-dessus d'une valeur limite est mesurée dans une conduite de pression de commande pneumatique (22) dans le véhicule tracté ou dans un véhicule tracteur du véhicule tracté ou lorsqu'un signal servant à actionner le frein de service est transmis à une conduite de freinage électrique.

3. Procédé selon la revendication 1 ou 2, **caractérisé en ce que** le véhicule tracté est freiné jusqu'à l'arrêt.

4. Procédé selon la revendication 1 ou l'une des autres revendications, **caractérisé en ce qu'**une décélération longitudinale du véhicule tracté est surveillée et que le véhicule tracté n'est freiné automatiquement et les freins à ressort ne sont aérés que lorsque la décélération longitudinale passe au-dessus d'une valeur limite.

5. Ensemble soupape (37) pour un système de freinage pneumatique d'un véhicule tracté, en particulier en liaison avec un système de freinage électronique, dans lequel le système de freinage pneumatique présente un réservoir de stockage (24) avec une pression de réservoir de stockage,
avec une unité soupape (48) à commande pneumatique servant à aérer les freins de service avec une pression de réservoir de stockage, dans la mesure où une pression au-dessus d'une valeur limite s'applique contre une entrée de commande (36) de l'unité soupape (48), et avec une électrovanne (33), laquelle est d'une part raccordée à une pression de commande du système de freinage pneumatique et à la pression de réservoir de stockage et peut basculer entre la pression de commande et la pression de réservoir de stockage, et laquelle est d'autre part reliée à l'entrée de commande (36) de l'unité soupape (48), de sorte que la pression de commande ou pression de réservoir de stockage s'applique contre l'entrée de commande (36) de l'unité soupape (48), en fonction de la position de l'électrovanne.

6. Véhicule tracté avec un système de freinage pneumatique, un système de freinage électronique et un ensemble soupape (37) selon la revendication 5.

7. Appareil de commande électronique permettant de mettre en œuvre le procédé selon l'une quelconque des revendications 1 à 4, pour la commande d'un ensemble soupape (37) selon la revendication 5 et/ou pour un véhicule tracté selon la revendication 6.
